# FASCICULE DE BREVET EUROPEEN

(11) **EP 3 630 399 B1**
(45) Date de publication et mention de la délivrance du brevet: **18.05.2022**
(21) Numéro de dépôt: 18726846.1
(22) Date de dépôt: 01.06.2018
(51) Int. Cl.: B22F 1/00, B22F 3/10, B22F 3/22, B22F 7/06, B22F 10/10, B28B 1/00, B28B 11/24, C04B 37/00, B33Y 10/00, B32B 18/00, C04B 35/622, C22C 1/04, B22F 5/00

(54) **PROCÉDÉ DE FABRICATION AMÉLIORÉ D'UNE PIÈCE À MICROSTRUCTURE DUALE**
VERBESSERTES HERSTELLUNGSVERFAHREN EINES BAUTEILS MIT EINER DUALEN MIKROSTRUKTUR
IMPROVED MANUFACTURING PROCESS OF A PIECE WITH A DUALE MICROSTRUCTURE

(30) Priorité: 01.06.2017 FR 1754877; 18.04.2018 FR 1853418
(43) Date de publication de la demande: 08.04.2020
(73) Titulaire: Safran, 75015 Paris (FR)
(72) Inventeur: RICHARD, Sébastien, Jean, 77550 Moissy-Cramayel (FR)
(74) Mandataire: Gevers & Orès
(86) Numéro de dépôt international: PCT/EP2018/064535
(87) Numéro de publication internationale: WO 2018/220213

(56) Documents cités:
- EP-A1- 2 233 232
- EP-A1- 3 059 033
- EP-A2- 3 173 202
- US-A- 3 717 442
- Jing Zheng: "Green state joining of silicon carbide using polymer precursors", , 1 janvier 2000 (2000-01-01), XP055450267, ISBN: 978-0-493-12384-4 Extrait de l'Internet: URL:https://lib.dr.iastate.edu/cgi/viewcon tent.cgi?referer=https://www.google.de/&ht tpsredir=1&article=1468&context=rtd

## Description

### DOMAINE TECHNIQUE

La présente invention concerne le domaine de la réalisation de pièces métalliques ou céramiques par un procédé de « mise en forme puis déliantage », par exemple un procédé PIM (*Powder Injection Molding,* moulage par injection de poudres), et en particulier, un procédé de soudage par cofrittage.

### ÉTAT DE L'ART

De manière classique et connue en soi, la réalisation de pièces par un procédé de type « mise en forme puis déliantage », en particulier un procédé PIM, comporte quatre étapes :
- l'élaboration d'un feedstock, ou matériau « vert »,
- la mise en forme (obtention d'une pièce « verte »),
- le déliantage, et
- le frittage (obtention d'une pièce dense). Le document EP-A1 -2 233 232 illustre un procédé de fabrication d'une pièce à partir d'une pièce verte comprenant une étape de déliantage et de frittage.

La mise en forme peut par exemple être obtenue par impression 3D ou, dans le cas spécifique du procédé PIM, par moulage. L'étape d'élaboration du feedstock (matériau vert) consiste principalement à mélanger une poudre d'un ou plusieurs matériau(x) métallique(s) et/ou céramique(s) constituant(s) de la pièce à fabriquer à un (ou plusieurs) liant(s) thermoplastique(s) à base de polymères. Cette étape est généralement réalisée à l'aide de mélangeurs et/ou d'extrudeuses sous un fort taux de cisaillement afin d'assurer une bonne homogénéité du mélange. Une quantité relativement importante de poudre doit être incorporée au(x) liant(s) pour assurer la cohésion de la future pièce. Si le mélange comporte trop de poudre, il en résulte une viscosité trop élevée qui rend l'étape de moulage difficile et favorise l'apparition de fissures. Si, au contraire, le mélange comporte trop de liant(s), le risque d'effondrement de la pièce à fabriquer pendant l'étape de déliantage augmente.

Dans le cas d'un procédé PIM, l'étape de moulage consiste à placer le feedstock (classiquement sous forme de granules) dans une presse à injecter semblable à celle de l'industrie plastique. Dans le cas d'autres procédés de type « mise en forme puis déliantage », il peut notamment s'agir d'une impression 3D. On obtient alors une pièce dite pièce verte qui est déjà sensiblement de la forme voulue pour la pièce dense (finale).

L'étape de déliantage consiste à éliminer le(s) liant(s) thermoplastique(s) par un procédé adapté à sa (leur) nature(s). Si cette étape est mal maîtrisée, elle peut être source d'endommagements de la pièce en fabrication par l'apparition de défauts, par exemple des fissurations ou des pollutions chimiques. A la fin de l'étape de déliantage, la pièce est poreuse.

L'étape de frittage consiste à consolider et densifier la pièce verte déliantée afin d'obtenir la pièce finale. La pièce est ainsi chauffée, et cette consolidation et densification s'accompagnent d'un retrait volumique qui est fonction de la composition initiale du feedstock. Cette étape s'effectue à une température élevée, mais toutefois telle que le matériau de la pièce verte déliantée ne soit pas totalement fondu : sous l'effet de la chaleur, les grains de matériau se soudent entre eux. On distingue le frittage en phase solide (l'intégralité du matériau de la pièce est sous forme solide), et le frittage en phase liquide (une partie du matériau de la pièce a atteint son point de fusion). A l'issue de l'étape de frittage, on obtient une pièce dense, la pièce finale.

Par ailleurs et de manière indépendante, l'industrie aéronautique a fait, ces dernières années, de nombreux progrès permettant d'augmenter la capacité en température des matériaux qui constituent les pièces des moteurs d'avions ou turbines d'hélicoptères, par exemple. Cependant les gains en température obtenus restent limités et il commence à être admis qu'une composition chimique et une microstructure d'un matériau donné ne peuvent pas, à elles seules, permettre de remplir les objectifs fixés par les cahiers des charges et les besoins techniques.

En effet, les performances d'une pièce (constituée d'un matériau donné) résident dans sa capacité à réaliser, pour une microstructure homogène optimisée, le meilleur compromis entre les différentes propriétés mécaniques requises. Ces propriétés sont d'ailleurs souvent contradictoires.

Un moyen de repousser les limites des matériaux actuels est d'adapter la microstructure de la pièce de moteur aux sollicitations locales de l'environnement de ladite pièce sur celle-ci.

Ceci revient à réaliser, sur une même pièce, une microstructure duale (de composition chimique ou de taille de grain différente d'une partie à l'autre de la pièce) ou à gradient (de taille de grain ou de composition chimique variant progressivement le long de la pièce). Par exemple, pour un disque de turbine, qui est une des pièces les plus sollicitées thermo-mécaniquement dans un turboréacteur, il est nécessaire d'avoir une structure dite « grains fins » en alésage de disque pour ses caractéristiques de traction et fatigue à température moyenne et une structure dite « gros grains » dans la jante du même disque afin d'avoir de meilleures propriétés en fluage et fissuration à haute température.

Actuellement, le moyen le plus connu pour réaliser une pièce à gradient de structure (ou duale) est un traitement thermique, comme illustré dans le document EP 3037194 A1, par exemple. Ce traitement thermique peut toutefois manquer de précision quant aux localisations précises des zones de la pièce dont il faut modifier la microstructure par rapport à celles où il ne faut pas modifier la microstructure. Par ailleurs, en cas d'erreur, toute la pièce est à mettre au rebut, ce qui peut engendrer des pertes au prix élevés.

Par ailleurs, les techniques de surmoulage (pour créer une pièce finale à microstructure duale) utilisées en PIM sont très limitées car les pressions mises en jeu lors de l'étape d'injection sont telles qu'il est pratiquement impossible de ne pas casser la pièce verte que l'on souhaite surmouler. De manière plus générale, il est difficile, peu importe le procédé de « mise en forme puis déliantage » considéré, d'assembler des sous-ensembles structurels de grande taille une fois que les différentes pièces du sous-ensemble structurel considéré sont finalisées.

Un des avantages du procédé PIM (ou de tout autre procédé de type « mise en forme puis déliantage » est la possibilité de co-friter différentes pièces, c'est-à-dire de les assembler en amont de l'étape de frittage et ainsi de réaliser, en parallèle du frittage, le soudage des différentes pièces entre elles. Ceci permet, par exemple, de fabriquer des pièces dont la géométrie serait trop complexe pour une mise en forme directe : on peut ainsi décomposer ces pièces trop complexes en sous-ensembles de pièces unitaires faciles à mettre en forme qui sont ensuite soudées entre elles lors de l'étape de frittage. Les différentes pièces vertes sont assemblées directement à l'état vert avant l'étape de frittage.

Ainsi, le problème technique que cherche à résoudre la présente invention est de réaliser des pièces de moteur répondant aux nécessités d'adapter leurs microstructures localement au moyen d'un procédé de type « mise en forme puis déliantage », en particulier le procédé PIM.

### EXPOSÉ DE L'INVENTION

L'invention propose à cet effet un procédé de soudage d'au moins deux pièces de matériau vert comprenant au moins un matériau métallique et/ou céramique constituant d'une pièce finale à fabriquer et un ou plusieurs liants thermoplastiques à base d'un ou de polymères, dites pièces vertes, comportant les étapes suivantes :
- assemblage des au moins deux pièces vertes au niveau d'une zone de jonction de ces pièces de manière à former un ensemble monobloc vert,
- déliantage de l'ensemble monobloc vert, et
- frittage de l'ensemble monobloc de manière à obtenir un ensemble monobloc dense formant pièce finale,
caractérisé en ce que les deux pièces vertes présentent chacune une composition de poudre différente de manière à donner une pièce finale comportant au-moins deux parties à taille de grain différente. Ce procédé permet ainsi de tirer parti de l'utilisation du cofrittage de deux pièces vertes mises en forme à partir de feedstocks de même taux de charge, contenant des poudres de granulométries ou de chimies différentes, permettant après co-frittage d'obtenir une pièce unique à microstructure duale.

On rappelle ici que l'on parle de « granulométrie » pour désigner taille des particules de poudre qui se trouvent dans le feedstock et de « taille de grain » pour désigner un élément caractéristique d'une microstructure. Ces deux grandeurs n'ont, a priori, pas de liens entre elles.

Un autre avantage du procédé revendiqué est que le contrôle de la santé de l'assemblage issu des différentes pièces à souder ensemble peut être réalisé en amont de l'étape de déliantage (et donc de frittage). Ainsi, en cas de rebut, la perte occasionnée est moins importante, en effet l'étape d'assemblage est une étape après laquelle la valeur ajoutée de la pièce en production est faible, contrairement à une pièce verte déjà déliantée ou même déjà frittée. Un défaut détecté après déliantage ou frittage mène à jeter une pièce à forte valeur ajoutée, ce qui est économiquement préjudiciable.

Le procédé de soudage selon l'invention peut comprendre la caractéristique suivante:
l es au-moins deux pièces vertes comportent des poudres présentant une D₉₀ inférieure à 16µm, 25µm ou 45µm.

Le procédé de soudage selon l'invention peut également comprendre la succession d'étapes suivantes :
- mise en contact des au moins deux pièces vertes au niveau d'une zone de jonction de ces pièces,
- ajout d'un cordon de soudure aux pièces vertes de manière à ce que le cordon de soudure épouse la forme de la zone de jonction, et de manière à former un ensemble monobloc vert homogène,
- déliantage de l'ensemble monobloc vert, et
- frittage de l'ensemble monobloc de manière à obtenir un ensemble monobloc dense et homogène formant pièce finale.

Cette variante du procédé présente plusieurs avantages par rapport à l'état de l'art, notamment le fait que la surface de la zone de jonction n'est plus un caractère limitant ou éventuellement source de fragilité. En effet, l'ajout d'un cordon de soudure permet d'étendre la surface de la soudure (zone de jonction) si nécessaire. Les surfaces de mise en contact n'ont, par ailleurs, plus besoin d'être préparées en amont, par usinage, par exemple : elles n'ont pas besoin de coopérer parfaitement car le cordon de soudure pallie les défauts de mise-en-contact.

Le procédé de soudage selon l'invention peut comprendre une ou plusieurs des caractéristiques ou étapes ci-dessous, prises isolément les unes des autres ou en combinaison les unes avec les autres :
- une étape d'usinage précède l'étape de déliantage, de manière à reprendre le cordon de soudure,
- l'ajout du cordon de soudure est réalisé au moyen d'une vis d'injection dont une buse pointe vers la zone de jonction de manière à déposer un cordon de soudure en matériau vert ramolli,
- l'ajout du cordon de soudure est réalisé en positionnant une bande de matériau vert solide au contact de la zone de jonction, et en chauffant cette bande au moyen d'un pistolet à air chaud,
- l'ajout du cordon de soudure est automatisé.

L'invention porte également sur un ensemble monobloc vert, comportant au moins deux pièces assemblées par le procédé décrit ci-dessus.

La pièce frittée peut ensuite suivre un traitement thermique standard et homogène, simple à mettre en œuvre, car la microstructure duale est déjà générée.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue en perspective d'une pièce présentant deux parties dont la microstructure doit être différenciée,
- la figure 2 est une vue en perspective de l'étape de l'ajout d'un cordon de soudure entre deux pièces à souder selon une première variante du procédé revendiqué,
- La figure 3 est une vue en perspective de l'étape de l'ajout d'un cordon de soudure entre deux pièces à souder selon une deuxième variante du procédé revendiqué,
- la figure 4 est une vue en coupe transversale schématique d'un ensemble monobloc vert homogène selon l'une ou l'autre des variantes des figures 2 et 3,
- la figure 5 est une vue en coupe transversale schématique d'un ensemble monobloc vert homogène après une étape d'usinage selon l'une ou l'autre des variantes illustrées ci-dessus,
- la figure 6 est une vue en coupe transversale schématique d'une pièce finale obtenue par une méthode de cofrittage de l'état de la technique classique,
- la figure 7 est une vue en coupe transversale schématique d'une pièce finale obtenue par l'une ou l'autre des variantes du procédé revendiqué,
- la figure 8 est une vue en perspective de la pièce de la figure 1 dont la microstructure différenciée a été représentée de manière schématique, grossie artificiellement.

### DESCRIPTION DÉTAILLÉE

Dans la présente invention, on entend par « feedstock » ou « matériau vert », un mélange suivant :
- au moins un matériau métallique et/ou céramique constituant d'une pièce à fabriquer, et
- un (ou plusieurs) liant(s) thermoplastique(s) à base de polymère(s). Ce mélange se présente classiquement sous forme de granules.

Par ailleurs, dans la présente invention, on entend par « pièce verte », une pièce en cours de fabrication qui a déjà été mise en forme mais qui n'a pas encore été déliantée. Cette pièce verte présente donc la forme générale de la pièce dense finale mais comme elle n'a pas encore subi l'étape de frittage, elle n'a pas encore ses dimensions finales. En effet, l'étape de frittage implique un phénomène dit de retrait volumique, qui est un phénomène de contraction dimensionnelle impliquant une diminution des dimensions de la pièce. Ce retrait volumique est fonction de la composition initiale du feedstock et en particulier du taux de charge dudit feedstock. Dans une formulation, une charge est une substance solide non miscible dispersée dans une matrice par un moyen mécanique. Ainsi, le taux de charge correspond au volume de poudre dans le feedstock.

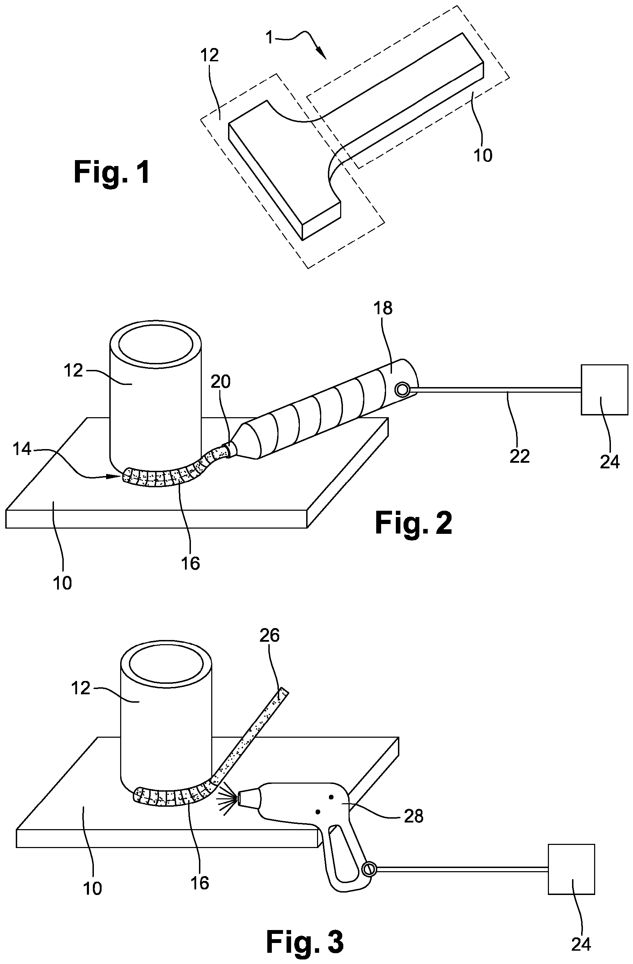

Comme visible sur la figure 1, un utilisateur désire réaliser une pièce finale 1 comportant deux parties (ou pièces 10, 12) de microstructures différentes.

Par exemple, l'utilisateur souhaite avoir une pièce finale 1 présentant de petits grains en surface (pour retarder un amorçage en fatigue par exemple), et dans le reste de la pièce des grains plus gros (pour avoir de la résistance en fluage par exemple).

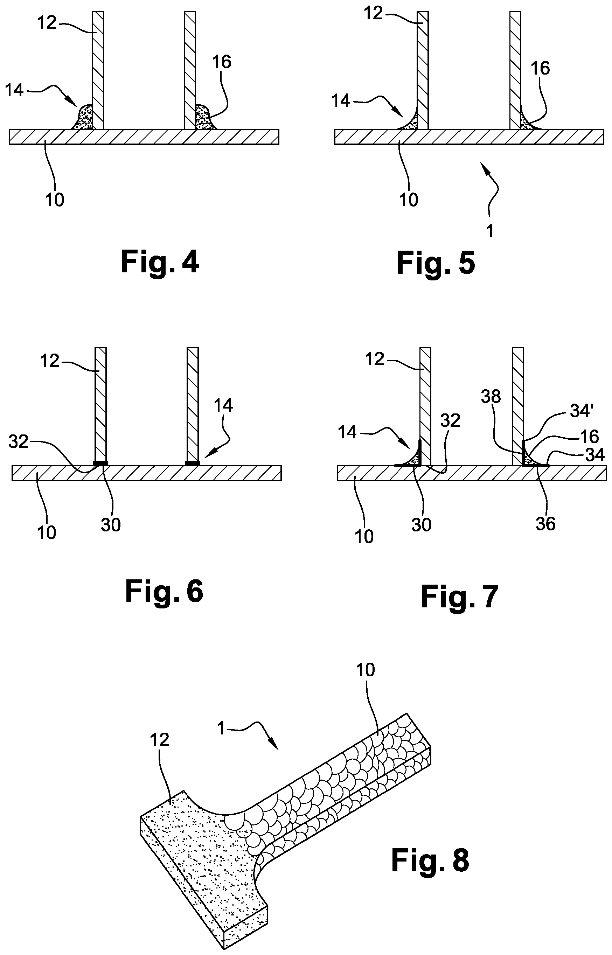

La technique de réalisation selon le procédé présenté ici consiste à mettre en forme la première pièce verte 10 à l'aide d'un feedstock comportant une grosse granulométrie de poudre, et la deuxième pièce verte 12 à l'aide d'un feedstock comportant une granulométrie plus fine (voir figure 8). Les deux pièces 10, 12 sont réalisées au moyen d'un procédé PIM, (ou tout autre procédé de mise en forme de pièces vertes de type impressions 3D par exemple) s'arrêtant à l'étape de moulage (ou de mise en forme) présentée ci-dessus.

Les deux pièces vertes 10, 12 sont donc assemblées, au niveau d'une zone de jonction 14 de ces pièces vertes 10, 12 de manière à former un ensemble monobloc vert. Cet assemblage à l'état vert peut notamment être fait par l'ajout d'un cordon de soudure en matériau vert, comme explicitéen détail ci-dessous : .
Comme visible sur les figures 2 et 3, un utilisateur désire souder deux pièces : par exemple une plaque 10 et un cylindre creux 12. Les deux pièces 10, 12 sont des pièces dites « vertes », c'est-à-dire, comme mentionné ci-dessus, qu'elles n'ont pas encore passé l'étape de déliantage.

Les deux pièces vertes 10, 12 sont donc mise en contact au niveau d'une zone de jonction 14 de ces pièces vertes 10, 12. Un cordon de soudure 16 lui-même en feedstock est ajouté aux pièces vertes 10, 12 de manière à ce que le cordon de soudure 16 épouse la forme de la zone de jonction 14. L'ensemble forme alors un ensemble monobloc vert homogène.

Selon le mode de réalisation illustré en figure 2, le dépôt du cordon de soudure 16 se fait au moyen d'une vis d'injection 18 dont une buse 20 pointe vers la zone de jonction 14. La température en sortie de la buse 20 est sensiblement la même que la température d'injection lors de l'étape de moulage des pièces vertes 10, 12. Par exemple, pour un feedstock *Inconel 718^{®}* utilisé aujourd'hui par la demanderesse, la température de la buse 20 est de 190°C. Pour un meilleur contrôle du procédé, la vis d'injection 18 peut être montée sur un bras robotisé 22, relié à une unité de commande 24 permettant une automatisation du procédé.

Selon le mode de réalisation illustré en figure 3, l'ajout du cordon de soudure 16 est réalisé en deux étapes :
- premièrement, une bande de matériau vert solide 26 est mise au contact de la zone de jonction 14,
- deuxièmement, ladite bande de matériau vert solide 26 est chauffée au moyen d'un pistolet à air chaud 28 de manière à ramollir le matériau de la bande 26 et de former le cordon de soudure 16.

Comme pour le mode de réalisation précédent, le pistolet à air chaud 28 peut être fixé sur un bras robotisé 24 relié à une unité de commande 24. Ceci permet, comme mentionné ci-dessus, un meilleur contrôle de l'étape de l'ajout du cordon de soudure 16.

Pour un matériau vert de formulation *Inconel 718^{®}* la température de l'air en sortie du pistolet 28 doit être supérieure à 100°C.

Suite à l'ajout du cordon de soudure 16, le procédé peut comporter une étape d'usinage : en effet, le cordon de soudure 16 étant à l'état vert, il peut être immédiatement repris en usinage, avant même l'étape de déliantage, afin de lui conférer directement un rayon ou une forme spécifique, comme illustré aux figures 4 et 5.

L'avantage d'un usinage pré-déliantage est qu'il nécessite moins d'énergie qu'un usinage sur une pièce finale, plus dure. Par ailleurs, une erreur d'usinage sur une pièce verte, à moindre valeur ajoutée, a moins d'impact qu'une erreur d'usinage sur une pièce finale à forte valeur ajoutée.

Par ailleurs, comme visible sur les figures 6 et 7, le procédé décrit dans la présente demande permet de souder des pièces PIM en s'affranchissant de la contrainte imposée par le cofrittage connu de l'état de la technique qui implique que la zone de jonction 14 est délimitée par l'ensemble des surfaces initiales 30, 32 en contact des pièces 10, 12 à assembler (voir figure 6). Grâce à la solution proposée par le procédé de la présente demande, ce sont les surfaces de contact 34, 34', 36, 38 entre le cordon de soudure 16 et les pièces à assembler 10, 12 qui constituent la zone de jonction 14 (voir figure 7). On compte ainsi quatre surfaces de contact 34, 34', 36, 38 là où avant on n'en comptait que deux, 30, 32. L'avantage direct qui en résulte est que la tenue mécanique de la zone de jonction 14 post soudage est améliorée.

Ainsi, suite à l'ajout du cordon de soudure 16, l'ensemble monobloc homogène forme une pièce finale 1 (voir figure 5) à part entière qui comporte deux pièces 10, 12 et le cordon de soudure 16. La zone de jonction 14 comporte au moins quatre surfaces 34, 34', 36, 38 (une première surface 36 appartenant à la première pièce 10, une seconde surface 38 appartenant à la deuxième pièce 12, une troisième et une quatrième surfaces 34, 34' appartenant au cordon de soudure 16) : la première surface 36 coopère avec la troisième surface 34, et la deuxième surface 38 coopère avec la quatrième surface 34' lors de l'étape de frittage et permet de renforcer la tenue mécanique de la pièce finale 1.

Par ailleurs, comme mentionné plus haut, le cofrittage des surfaces 30, 32 des pièces vertes 10, 12 en contact n'est pas nécessaire : la jonction se faisant par cofrittage des surfaces 36, 38 des pièces vertes 10 , 12 en contact avec des surfaces 34, 34' du cordon de soudure 16, ajouté dans un deuxième temps de manière à épouser la forme de la zone de jonction 14, le contact entre les différentes surfaces 34, 34', 36, 38 à souder est satisfaisant et ne nécessite pas de préparation en amont de l'étape de frittage.

Suite à l'ajout et à l'éventuel usinage du cordon de soudure 16, l'ensemble monobloc vert homogène est délianté, puis fritté, de manière à obtenir un ensemble monobloc dense et homogène, soit une pièce finale, comme visible aux figures 7 et 8.

Ainsi, une illustration d'un exemple de procédé complet de production de pièces assemblées au vert tel que décrit dans la présente demande est, par exemple avec des pièces en *Inconel 718^{®}* :
- injection des pièces à assembler, par exemple deux pièces distinctes 10, 12;
- assemblage des pièces 10, 12 par le procédé revendiqué dans la présente demande, en ajoutant un cordon de soudure 16 en *Inconel 718^{®}* ;
- éventuelle reprise d'usinage dans la zone de jonction 14 si besoin ;
- déliantage selon un protocole classique défini sur *Inconel 718^{®}* ;
- frittage selon un protocole classique défini sur Inconel *718^{®}*.

Au frittage, la partie de l'ensemble monobloc comportant des poudres de granulométrie plus fine, correspondant à la deuxième pièce verte 12, présente des grains plus fins, tandis que la partie de la pièce finale 1 comportant des poudres de granulométrie supérieure, correspondant à la première pièce verte 10, présente des grains plus gros (voir figure 8).

Les deux pièces vertes 10, 12 étant déjà de granulométrie différentes, l'ensemble monobloc fritté peut alors suivre un traitement thermique standard et homogène : en effet, la microstructure duale est réalisée à l'étape de frittage.

Le même type de résultat peut être obtenu en faisant varier la composition chimique des poudres de chacune des pièces vertes 10, 12 plutôt que leur granulométrie, par exemple en utilisant un superalliage à base de nickel avec un taux de carbone variable. Dans ce type de superalliages, le carbone précipite sous forme de carbure et cette teneur de carbone précipité s'oppose plus ou moins au grossissement du grain lors du frittage.

En particulier, en utilisant un premier feedstock (une première pièce 10) comportant une poudre de chimie n°1 et un deuxième feedstock (une deuxième pièce 12) comportant une poudre de chimie n°2. Il peut, par exemple, s'agir d'un un alliage de *René 77^{®}* avec un fort taux de carbone en guise de poudre de chimie n°1 et un alliage de *René 77^{®}* avec un faible taux de carbone en guise de poudre de chimie n°2. On obtient ainsi une l'ensemble monobloc fritté ayant une structure duale, grâce au fait que le taux de carbone a, sur le *René 77^{®}*, une influence sur le grossissement du grain au cours du frittage.

Divers exemples de réalisations permettent l'obtention de pièces finales 1 présentant des granulométries différentes. Par exemple avec des poudres *d'Inconel 718^{®}* présentant une D₉₀ inférieure à 16µm, 25µm ou 45µm. On peut aussi envisager un cas dans lequel les deux poudres présentant une composition chimique différente en prenant, par exemple, du *René 77^{®}* contenant 660ppm de carbone ou 160ppm de carbone. Ces valeurs de D₉₀ mesurées se rapportent à la granulométrie des poudres utilisées dans le feedstock constitutif de chaque pièce prise séparément.

Le paramètre D₉₀, représente un point sur la courbe de distribution des tailles de particules composant une pièce. Ce point particulier indique de quelle taille sont 90% des particules du volume total de la pièce considérée. Par exemple, si la D₉₀ est de 844nm, alors 90% des particules de la pièce considérée ont un diamètre égal ou inférieur à 844nm et 10% ont donc une taille supérieure. Cette mesure peut notamment être obtenue par diffraction laser. Classiquement, pour caractériser la granulométrie d'une pièce, on mesure D₁₀, D₅₀ et D₉₀. D₁₀ est toujours plus petit que D₅₀ qui est plus petit que D₉₀. Plus leurs valeurs sont proches, plus la taille des particules de poudre est homogène.

Le verrou technique réside dans la mise en forme dès l'état vert, d'une pièce finale 1 à l'aide de deux feedstocks (pièces vertes 10, 12) différents. En effet, il est important que les deux feedstocks présentent un taux de charge (proportion poudres/liants) identique, ce qui garantit un retrait volumique identique ou sensiblement identique de chacune des pièces vertes 10, 12 au frittage.

Il faut également que les domaines de frittage des pièces vertes 10, 12 soient compatibles entre eux.

Il faut également veiller à ce que la mise en forme des pièces vertes 10 et 12 permette l'obtention d'une interface 14 saine à la jonction entre les deux pièces vertes 10, 12.

Une illustration du procédé complet de production de pièces assemblées au vert tel que décrit dans la présente demande est, par exemple, réalisé avec des pièces en *Inconel 718^{®}* :
- injection des pièces à assembler, par exemple deux pièces distinctes 10, 12 dont l'une serait de granulométrie A et l'autre de granulométrie B;
- assemblage des pièces 10, 12 par le procédé revendiqué dans la présente demande ;
- éventuelle reprise d'usinage dans la zone de jonction 14 si besoin ;
- déliantage selon un protocole classique défini sur *Inconel 718*^{®} ;
- frittage selon un protocole classique défini sur *Inconel 718*^{®}*.*

## Revendications

1. Procédé de soudage d'au moins deux pièces de matériau vert (10, 12) comprenant au moins un matériau métallique et/ou céramique constituant d'une pièce finale (1) à fabriquer et un ou plusieurs liants thermoplastiques à base d'un ou de polymères, les pièces de matériau vert (10, 12) sont dites pièces vertes, le procédé comportant les étapes suivantes :
- assemblage des au moins deux pièces vertes (10, 12) au niveau d'une zone de jonction (14) de ces pièces de manière à former un ensemble monobloc vert,
- déliantage de l'ensemble monobloc vert, et
- frittage de l'ensemble monobloc de manière à obtenir un ensemble monobloc dense formant la pièce finale (1),
**caractérisé en ce que** les deux pièces vertes (10, 12) présentent chacune une composition de poudre à granulométrie différente ou une composition chimique de poudre différente, les compositions de poudre présentant un même taux de charge, de manière à ce que la pièce finale (1) comporte au-moins deux parties à taille de grain différentes.

2. Procédé selon la revendication précédente, dans lequel les pièces vertes (10, 12) comportent des poudres présentant une D₉₀ inférieure à 45µm, 25µm ou 16µm telle que mesurée par diffraction laser.

3. Procédé selon la revendication 1, **caractérisé en ce qu'**il comprend une étape d'ajout d'un cordon de soudure (16) aux pièces vertes de manière à ce que le cordon de soudure (16) épouse la forme de la zone de jonction (14), et de manière à former un ensemble monobloc vert homogène.

4. Procédé selon la revendication 3, **caractérisé en ce que** le cordon de soudure et les pièces vertes à assembler sont de compositions identiques.

5. Ensemble monobloc vert, comportant au moins deux pièces vertes (10, 12) assemblées par le procédé selon l'une quelconque des revendications 1 à 4, **caractérisé en ce que** les au-moins deux pièces vertes (10, 12) présentent une composition de poudre à granulométrie différente ou une composition chimique de poudre différente, les compositions de poudre présentant un même taux de charge, de manière à former une pièce finale (1) présentant au-moins deux parties avec une taille de grain différente.

## Patentansprüche

1. Verfahren zum Schweißen mindestens zweier Teile aus ökologischem Material (10, 12), umfassend mindestens ein Metall- und/oder Keramikmaterial, die ein herzustellendes Endprodukt (1) konstituieren, und ein oder mehrere thermoplastische Bindemittel auf Basis eines oder von Polymeren, wobei die Teile aus ökologischem Material (10, 12) als ökologische Teile bezeichnet werden, wobei das Verfahren die folgenden Schritte umfasst:
- Zusammenfügen der mindestens zwei ökologischen Teile (10, 12) an einem Verbindungsbereich (14) dieser Teile derart, dass sie eine ökologische Monoblockanordnung bilden,
- Aufspalten der ökologischen Monoblockanordnung, und
- Sintern der Monoblockanordnung derart, dass eine dichte Monoblockanordnung erhalten wird, die das Endprodukt (1) bildet,
**dadurch gekennzeichnet, dass** die zwei ökologischen Teile (10, 12) jeweils eine Pulverzusammensetzung mit unterschiedlicher Korngrößenverteilung oder eine chemische Zusammensetzung mit unterschiedlichem Pulver aufweisen, wobei die Pulverzusammensetzungen einen gleichen Ladestrom derart aufweisen, dass das Endprodukt (1) mindestens zwei Abschnitte mit unterschiedlicher Korngröße umfasst.

2. Verfahren nach dem vorstehenden Anspruch, wobei die ökologischen Teile (10, 12) Pulver umfassen, die einen D90 kleiner als 45 µm, 25 µm oder 16 µm aufweisen, wie durch Laserbeugung gemessen.

3. Verfahren nach Anspruch 1, **dadurch gekennzeichnet, dass** es einen Schritt des Hinzufügens einer Schweißraupe (16) zu den ökologischen Teilen derart umfasst, dass die Schweißraupe (16) die Form des Verbindungsbereichs (14) annimmt, und dass eine homogene ökologische Monoblockanordnung gebildet wird.

4. Verfahren nach Anspruch 3, **dadurch gekennzeichnet, dass** die Schweißraupe und die zusammenzufügenden ökologischen Teile identische Zusammensetzungen besitzen.

5. Ökologische Monoblockanordnung, umfassend mindestens zwei ökologische Teile (10, 12), die durch das Verfahren nach einem der Ansprüche 1 bis 4 zusammengefügt sind, **dadurch gekennzeichnet**, das die mindestens zwei ökologischen Teile (10, 12) eine Pulverzusammensetzung mit unterschiedlicher Korngrößenverteilung oder eine chemische Zusammensetzung mit unterschiedlichem Pulver aufweisen, wobei die Pulverzusammensetzungen einen gleichen Ladestrom derart aufweisen, dass sie ein Endprodukt (1) bilden, das mindestens zwei Abschnitte mit einer unterschiedlichen Korngröße aufweist.

## Claims

1. Method for welding together at least two parts of green material (10, 12) comprising at least a metal and/or ceramic material forming a final part (1) to be manufactured, and one or more thermoplastic binders with a polymer base, the parts of green material (10, 12) referred to as green parts, the method comprising the following steps:
- assembling the at least two green parts (10, 12) at a junction zone (14) of said parts so as to form a green one-piece assembly,
- de-binding the green one-piece assembly, and
- sintering the one-piece assembly so as to obtain a dense one-piece assembly forming the final part (1),
**characterised in that** the two green parts (10, 12) are each having a powder composition with different granulometries or a different powder chemical compositions, the powder compositions having the same proportion of filler, so that the final part (1) has at least two parts with different grain sizes.

2. Method according to the preceding claim, wherein the green parts (10, 12) comprise powders that have a D₉₀ less than 45 µm, 25 µm or 16 µm.

3. Method according to claim 1, **characterised in that** it comprises a step of adding a weld bead (16) to the green parts in such a way that the weld bead (16) hugs the shape of the junction zone (14), and in such a way as to form a homogeneous green one-piece assembly.

4. Method according to claim 3, **characterised in that** the weld bead and the green parts to be assembled are of identical compositions.

5. Dense one-piece assembly comprising at least two green parts (10, 12) assembled by the method according to any of claims 1 to 4, **characterised in that** the at least two green parts (10, 12) have a powder composition with different granulometries or a different powder chemical compositions, the powder compositions having the same proportion of filler, so as to form a final part (1) having at least two parts with a different grain size.
